(19) Europäisches Patentamt
European Patent Office
Office européen des brevets

(11) **EP 2 275 990 B1**

(12) **EUROPÄISCHE PATENTSCHRIFT**

(45) Veröffentlichungstag und Bekanntmachung des Hinweises auf die Patenterteilung:
**26.09.2012 Patentblatt 2012/39**

(51) Int Cl.:
***G06T 7/00*** *(2006.01)*

(21) Anmeldenummer: **09164664.6**

(22) Anmeldetag: **06.07.2009**

(54) **3D-Sensor**

3D sensor

Capteur 3D

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**19.01.2011 Patentblatt 2011/03**

(73) Patentinhaber: **SICK AG**
**79183 Waldkirch (DE)**

(72) Erfinder:
• **Rothenberger, Bernd**
**79206 Breisach (DE)**
• **MacNamara, Dr. Shane**
**79285 Ebringen (DE)**
• **Braune, Ingolf**
**79194 Gundelfingen (DE)**

(74) Vertreter: **Ludewigt, Christoph**
**Sick AG**
**Intellectual Property**
**Erwin-Sick-Strasse 1**
**79183 Waldkirch (DE)**

(56) Entgegenhaltungen:
**DE-A1-102007 031 157    US-A1- 2001 028 729**
**US-A1- 2003 222 983**

**Beschreibung**

Die Erfindung betrifft einen 3D-Sensor und ein 3D-Überwachungsverfahren nach dem Oberbegriff von Anspruch 1 beziehungsweise 11.

Kameras werden seit langem zur Überwachung eingesetzt und finden zunehmend auch Anwendung in der Sicherheitstechnik. Eine typische sicherheitstechnische Anwendung ist die Absicherung einer gefährlichen Maschine, wie etwa einer Presse oder eines Roboters, wo bei Eingriff eines Körperteils in einen Gefahrenbereich um die Maschine herum eine Absicherung erfolgt. Dies kann je nach Situation die Abschaltung der Maschine oder das Verbringen in eine sichere Position sein.

Die ständig zunehmende Verfügbarkeit leistungsstarker Rechner ermöglicht, Echtzeitanwendungen wie einer Überwachungsaufgabe dreidimensionale Bilddaten zugrunde zu legen. Ein bekanntes Verfahren zu deren Gewinnung ist die Stereoskopie. Dabei werden Bilder der Szenerie mit einem Empfangssystem, das im Wesentlichen aus zwei zueinander beabstandeten Kameras besteht, aus leicht unterschiedlichen Perspektiven gewonnen. In den überlappenden Bildbereichen werden gleiche Strukturen identifiziert und aus der Disparität und den optischen Parametern des Kamerasystems mittels Triangulation Entfernungen und somit ein dreidimensionales Bild beziehungsweise eine Tiefenkarte berechnet.

Stereoskopische Kamerasysteme bieten gegenüber herkömmlichen sicherheitstechnischen Sensoren wie Scannern und Lichtgittern den Vorteil, flächendeckend Tiefeninformationen aus einer zweidimensional aufgenommenen Beobachtungsszenerie zu ermitteln. Mit Hilfe der Tiefeninformationen können in sicherheitstechnischen Anwendungen Schutzbereiche variabler und genauer festgelegt und mehr und genauere Klassen von erlaubten Objektbewegungen unterschieden werden. Beispielsweise ist es möglich, Bewegungen des Roboters selbst oder Vorbeibewegungen eines Körperteils an der gefährlichen Maschine in einer unterschiedlichen Tiefenebene als ungefährlich zu erkennen. Das wäre mit einem zweidimensionalen System von einem unzulässigen Eingriff nicht unterscheidbar.

Ein anderes bekanntes Verfahren zur Erzeugung dreidimensionaler Bilddaten ist das Lichtlaufzeitverfahren. In einer speziellen Ausgestaltung verfügt der Bildsensor über PMD-Pixel (Photonmischdetektion), die jeweils über eine Phasenmessung die Laufzeit von ausgesandtem und wieder empfangenem Licht bestimmen. Damit nimmt der Bildsensor zusätzlich zu einem üblichen zweidimensionalen Bild auch Entfernungsdaten auf.

Gegenüber zweidimensionalen Kameras besteht im Rahmen der Sicherheitstechnik für eine zuverlässige Sicherheitsfunktion über das sichere Erkennen eines Eingriffs in den bereitgestellten Bilddaten hinaus das Bedürfnis, zunächst überhaupt eine qualitativ hochwertige und hinreichend dichte Tiefenkarte mit verlässlichen Entfernungswerten zu erzeugen, also einen zuverlässigen Abstandswert für jeden relevanten Bildbereich und im Idealfall nahezu jeden Bildpunkt verfügbar zu haben. Passive Systeme, also solche ohne eigene Beleuchtung, ermöglichen lediglich die Gewinnung dünn besetzter Tiefenkarten. Nur an Objektkonturen oder Schattenkanten und dort, wo hinreichend natürliche Textur oder Struktur vorhanden ist, liefert der Stereoskopiealgorithmus von passiven Systemen einen verlässlichen Entfernungswert.

Der Einsatz einer speziell angepassten strukturierten Beleuchtung verbessert diese Situation zwar erheblich, denn die Beleuchtung macht den Sensor unabhängig von natürlichen Objektkonturen und Objekttexturen. Auch in so erzeugten Tiefenkarten treten aber Teilbereiche auf, in denen aufgrund photometrischer oder geometrischer Bedingungen der Szene die Tiefe nicht korrekt gemessen wird.

Um diese Teilbereiche zunächst überhaupt aufzufinden, müssen die Entfernungspixel der Tiefenkarte bewertet werden. Ein Maß für die Verlässlichkeit der geschätzten Entfernungen liefern viele Stereoskopiealgorithmen mit der Tiefenkarte selbst, beispielsweise in Form einer Qualitätskarte, die für jeden Entfernungspixel der Tiefenkarte einen Verlässlichkeitswert hält. Ein denkbares Maß für die Verlässlichkeit ist die Güte der Korrelation der Strukturelemente in dem rechten und linken Bild, die bei der Disparitätsschätzung als gleiche Bildelemente aus den unterschiedlichen Perspektive der beiden Kameras erkannt wurden. Zusätzlich werden häufig weitere Filter nachgeschaltet, um Voraussetzungen für den Stereoskopiealgorithmus zu überprüfen oder die geschätzten Entfernungen zu plausibilisieren.

Unzuverlässig bestimmte Entfernungswerte sind in sicherheitstechnischen Anwendungen höchst gefährlich. Wird die Lage, Größe oder Entfernung eines Objekts falsch eingeschätzt, so führt dies möglicherweise dazu, dass die Abschaltung der Gefährdungsquelle unterbleibt, weil der Eingriff des Objekts fehlerhaft als unkritisch eingestuft wird. Deshalb werden der Auswertung üblicherweise nur Entfernungspixel zugrunde gelegt, welche als hinreichend zuverlässig eingestuft werden. Der Stand der Technik kennt aber keine Lösungen, wie mit Teilbereichen der Tiefenkarte ohne zuverlässige Entfernungswerte umzugehen ist.

Aus der US2003/0222983 A1 ist eine Überwachungsvorrichtung für eine Fahrzeugumgebung bekannt, die dem Fahrer ein Bild von Hindernissen zur Verfügung stellt. Dazu bestimmt ein Stereokamerasystem die dreidimensionale Position des Hindernisses und bewertet die Zuverlässigkeit der Positionsdaten. Es sind zwei Einheiten vorgesehen, um die Kamerabilder in Ansichten für den Fahrer umzurechnen, wobei eine der beiden Einheiten dabei die dreidimensionalen Positionsdaten verwendet und die andere nicht. Dem Fahrer wird immer nur das Bild von einer Einheit gezeigt. Die Entscheidung, welche das ist, hängt davon ab, ob zu einem jeweiligen Zeitpunkt in den dreidimensionalen Positionen eine Mindestanzahl von Punkten eine Zuverlässigkeitsschwelle unterschreitet.

Die US2001/0028729 A1 offenbart ein Objekterkennungssystem, welches mit einer Stereokamera Objekte vor einem Fahrzeug erkennt. Dazu werden Bereiche mit ähnlichen Entfernungsschätzungen geclustert und so zu Objekten zusammengesetzt. Cluster mit einer Gesamtfläche unterhalb einer Schwelle werden als Störung, beispielsweise Regentropfen oder Rauschen, und damit als ungültig angesehen.

Es ist daher Aufgabe der Erfindung, ein 3D-System anzugeben, welches lückenhaft besetzte Tiefenkarten auswerten kann.

Diese Aufgabe wird durch einen 3D-Sensor gemäß Anspruch 1 und ein 3D-Überwachungsverfahren gemäß Anspruch 11 gelöst.

Die erfindungsgemäße Lösung geht von dem Prinzip aus, Lücken in der Tiefenkarte zu erkennen und zu bewerten. Um Sicherheitsrisiken auszuschalten, müssen Bereiche der Tiefenkarte, in denen keine zuverlässigen Entfernungswerte vorliegen, wie blinde Flecken und damit letztlich ähnlich streng wie Objekteingriffe bewertet werden. Dann führen die Lücken nicht mehr zu Sicherheitsrisiken. Nur wenn keine Lücke groß genug ist, dass darin ein unzulässiger Eingriff verborgen bleiben kann, ist die Tiefenkarte für eine sicherheitsgerichtete Auswertung geeignet.

Die Erfindung hat den Vorteil, dass der 3D-Sensor auch in realen Umgebungen sehr robust mit Messfehlern oder Artefakten zurecht kommt. Dabei wird bei voller Sicherheit eine hohe Verfügbarkeit erreicht.

Zuverlässigkeitskriterien können eine Schwellenanforderung an ein Korrelationsmaß sein, aber auch weitere Filter zur Bewertung der Güte einer stereoskopischen Entfernungsmessung. Die unkritische Höchstgröße für eine Lücke hängt von der gewünschten Auflösung des 3D-Sensors ab und orientiert sich in sicherheitstechnischen Anwendungen daran, welche Detektionsfähigkeit erreicht werden soll, ob also beispielsweise Fingerschutz (z.B. 14mm), Armschutz (z.B. 30mm) oder Körperschutz (z.B. 70mm bis zu 150mm) gewährleistet sein soll.

Die Lückenbewertungseinheit ist bevorzugt für eine Bewertung der Größe von Lücken anhand einer größtmöglichen in die Lücke eingeschriebenen geometrischen Form ausgebildet, insbesondere anhand des Durchmessers eines Inkreises oder der Diagonale eines Innenrechtecks. Damit wird die Häufigkeit minimiert, in der als kritisch eingestufte Lücken erkannt werden, und so die Verfügbarkeit weiter erhöht. Die optimale geometrische Form zum Sicherstellen der Auflösung des Sensors wäre der Inkreis. Um den rechnerischen Aufwand zu begrenzen, können auch andere Formen verwendet werden, wobei Rechtecke oder speziell Quadrate wegen der gitterförmigen Pixelstruktur üblicher Bildsensoren besonders einfach und damit schnell auswertbar sind. Die Verwendung der Diagonale als deren Größenmaß ist nicht zwingend, aber eine sichere obere Grenze.

Vorteilhafterweise weist der 3D-Sensor eine Objektbewertungseinheit auf, welche dafür ausgebildet ist, zusammenhängende Bereiche von Entfernungspixeln als Objekte zu erkennen und die Größe eines Objekts anhand einer kleinstmöglichen, das Objekt umschreibenden geometrischen Form zu bewerten, insbesondere anhand des Durchmessers eines Umkreises oder der Diagonale eines umgeschriebenen Rechtecks. Die zusammenhängenden Bereiche bestehen dabei in aller Regel aus gültigen Entfernungspixeln, also solchen, deren Zuverlässigkeitswert das Zuverlässigkeitskriterium erfüllt. Zusammenhängend ist zunächst so zu verstehen, dass die Entfernungspixel selbst zueinander benachbart sind. Mit zusätzlichem Auswertungsaufwand kann auch eine Nachbarschaftsbeziehung in der Tiefendimension gefordert werden, beispielsweise eine höchste Abstandsschwelle der Tiefenwerte. Das umgeschriebene Rechteck wird häufig auch als Bounding Box bezeichnet.

Objekte werden demnach bevorzugt durch eine umgebende, Lücken durch eine eingeschriebene geometrische Form ausgewertet, Objekte also maximiert und Lücken minimiert. Dies ist ein fundamentaler Unterschied bei der Vermessung von Objekten und Lücken, der ihrer unterschiedlichen Natur Rechnung trägt. Es ist nämlich das Ziel, auf keinen Fall ein Objekt zu übersehen, während trotz Lücken möglichst viele auswertbare Tiefenkarten und Bereiche von Tiefenkarten erhalten bleiben sollen.

Die Objektbewertungseinheit ist bevorzugt dafür ausgebildet, in einem ersten Schritt eine binäre Karte zu erzeugen, die in jedem Pixel festhält, ob der Zuverlässigkeitswert des zugehörigen Entfernungspixels das Zuverlässigkeitskriterium erfüllt und somit mit einem gültigen Entfernungswert besetzt ist oder nicht, dann in einem weiteren Schritt in einem einzigen zeilenweisen Durchgang Teilobjekte zu definieren, indem ein besetztes Entfernungspixel ohne besetzten Nachbar ein neues Teilobjekt beginnt und besetzte Entfernungspixel mit mindestens einem besetzten Nachbarn dem Teilobjekt eines der besetzten Nachbarn angelagert werden, und in einem dritten Schritt Teilobjekte, die zueinander höchstens einen vorgegebenen Abstand aufweisen, zu den Objekten zusammenzufassen. Dieses Vorgehen ist sehr schnell und dabei dennoch in der Lage, jede beliebige Objektform zu einem einzigen Objekt zu clustern.

Die Lückenbewertungseinheit und/oder die Objektbewertungseinheit ist bevorzugt dafür ausgebildet, die Größe einer Lücke oder eines Objekts nach unten abzuschätzen, insbesondere durch Projektion an den fernen Rand des Überwachungsbereichs oder eines Arbeitsbereichs. Dem liegt eine worst-case-Annahme zugrunde. Das ausgemessene Objekt beziehungsweise die ausgemessene Lücke könnte ein aus Sicht des Sensors weiter hinten liegendes und damit aufgrund der Perspektive möglicherweise größeres Objekt verdecken. Dies wird durch die Projektion unter perspektivischer Größenanpassung berücksichtigt, so dass der Sensor keine Objekte übersieht. Unter fernem Rand ist dabei die durchaus in einigen Anwendungen ortsabhängige Begrenzung des interessierenden Überwachungsbereichs zu verstehen, nicht etwa die maximale Sichtweite.

Die Lückenbewertungseinheit und/oder die Objektbewertungseinheit ist bevorzugt dafür ausgebildet, Lücken oder Objekte der Tiefenkarte in einem einzigen zeilenweisen Durchgang in Echtzeit zu berechnen. Der Begriff zeilenweise bezieht sich auf die übliche Ausleserichtung eines Bildsensors. Auf diese Weist wird eine sehr schnelle Auswertung der Tiefenkarte und damit eine kurze Ansprechzeit des Sensors ermöglicht.

Die Lückenbewertungseinheit ist bevorzugt dafür ausgebildet, die Größe von Lücken zu bestimmen, indem sukzessive eine Auswertungskarte s nach der Rechenvorschrift

$$s(x,y) = \begin{cases} 0 & wenn\ d(x,y) \neq 0 \\ 1 + \min(s(x-1,y), s(x-1,y-1), s(x,y-1)) & wenn\ d(x,y) = 0 \end{cases}$$

erzeugt wird, wobei d(x,y)=0 genau dann gilt, wenn der Zuverlässigkeitswert des Entfernungspixels an der Position (x, y) der Tiefenkarte das Zuverlässigkeitskriterium nicht erfüllt. Dies ist ein Verfahren, das sehr schnell mit einem einzigen zeilenweisen Durchlauf ohne Genauigkeitseinbuße arbeitet.

In einer bevorzugten Ausführungsform sind mindestens zwei Bildsensoren zur Aufnahme von Bilddaten des Überwachungsbereichs aus unterschiedlicher Perspektive vorgesehen, wobei die 3D-Auswertungseinheit als Stereoskopie-Auswertungseinheit für die Erzeugung der Tiefenkarte und der Zuverlässigkeitswerte mit einem stereoskopischen Verfahren ausgebildet ist. Stereoskopische Kameras sind verhältnismäßig lange bekannt, so dass eine Reihe von Zuverlässigkeitsmaßen verfügbar ist, um robuste Auswertungen sicherzustellen.

In vorteilhafter Weiterbildung ist eine Warn- oder Abschalteinheit vorgesehen, mittels derer bei Erkennung von Lücken oder unzulässigen Objekten größer als die unkritische Höchstgröße ein Warnsignal oder ein sicherheitsgerichteter Abschaltbefehl an eine gefährliche Maschine ausgebbar ist. Die Höchstgröße für Lücken und Objekte ist gewöhnlich dieselbe und orientiert sich an der zu erreichenden Detektionsfähigkeit beziehungsweise Schutzklasse. Voneinander abweichende Höchstgrößen für Lücken und Objekte sind aber auch vorstellbar. Die Vermessung der Lücken und Objekte erfolgt aber bevorzugt unterschiedlich, nämlich einmal durch eine innere und einmal durch eine äußere geometrische Form. Mit der Warn- und Abschalteinheit wird die wichtigste sicherheitstechnische Funktion zur Absicherung einer Gefahrenquelle realisiert. Dabei können wegen der dreidimensionalen Tiefenkarte entfernungsabhängige Schutzvolumina definiert werden, und wie schon angesprochen kann die scheinbare Veränderung der Objektgröße durch die Perspektive mittels Projektion kompensiert werden.

Bevorzugt ist ein Arbeitsbereich als Teilbereich des Überwachungsbereichs vorgegeben, und die 3D-Auswertungseinheit, die Lückenbewertungseinheit und/oder die Objektbewertungseinheit wertet die Tiefenkarte nur innerhalb des Arbeitsbereichs aus. Damit wird der Rechenaufwand reduziert. Der Arbeitsbereich kann vorgegeben oder durch Konfiguration verändert werden. Im einfachsten Fall entspricht er dem Sichtbereich bis hin zu einer vorgegebenen Entfernung. Eine deutlichere Einschränkung und damit höheren Rechenzeitgewinn bietet ein Arbeitsbereich, der aus einem oder mehreren zwei- oder dreidimensionalen Schutzfeldern besteht. Sind Schutzfelder zunächst völlig objektfrei, so wird die Auswertung auf unzulässige Eingriffe vereinfacht, wenn schlicht jedes eingreifende Objekt unzulässig ist. Es können aber auch dynamisch bestimmte erlaubte Objekte, Zeiten, Bewegungsmuster und dergleichen konfiguriert oder eingelernt werden, um unzulässige und zulässige Objekteingriffe voneinander zu unterscheiden. Das erfordert höheren Auswertungsaufwand, bietet dafür aber eine erheblich gesteigerte Flexibilität.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1    eine schematische räumliche Gesamtdarstellung eines 3D-Sensors;

Fig. 2    eine schematische Tiefenkarte mit Objekten und Lücken;

Fig. 3a    ein Ausschnitt aus der Tiefenkarte gemäß Figur 2 zur Erläuterung der Ob- jektdetektion und Objektvermessung;

Fig. 3b    ein Ausschnitt aus der Tiefenkarte gemäß Figur 2 zur Erläuterung der Lü- ckendetektion und Lückenvermessung;

Fig. 4    eine schematische Darstellung einer Objektkarte zur Erläuterung des Ob- jektclusterings;

Fig. 5a    eine schematische Ausschnittsdarstellung einer Lückenkarte und

Fig. 5b    eine schematische Ausschnittsdarstellung einer s-Karte zur Vermessung der Lücke aus Figur 5a

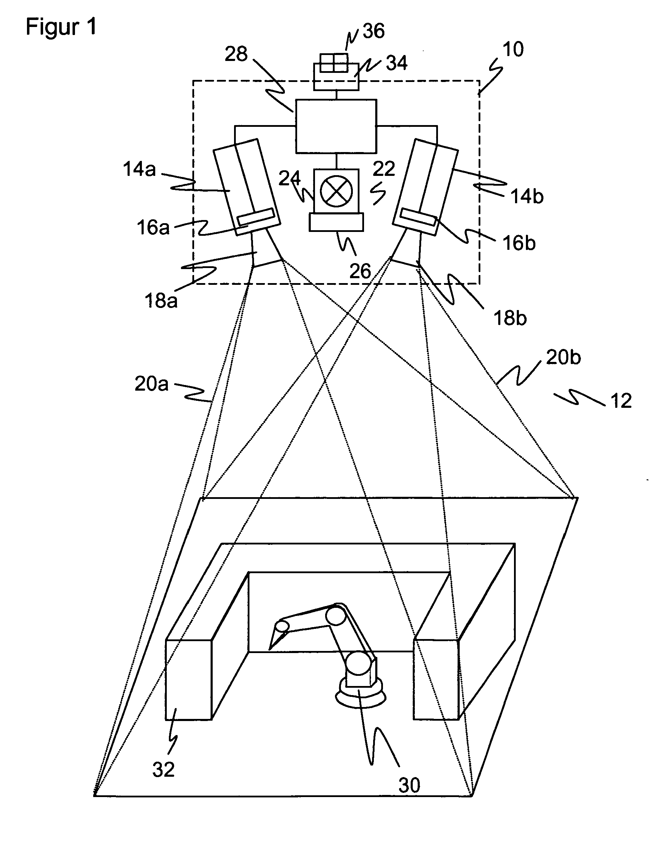

Figur 1 zeigt in einer schematischen dreidimensionalen Darstellung den allgemeinen Aufbau eines erfindungsgemäßen 3D-Sicherheitssensors 10 nach dem Stereoskopieprinzip, die zur sicherheitstechnischen Überwachung eines Raumbereichs 12 eingesetzt ist. Die erfindungsgemäße Bereichserweiterung lässt sich auch für Tiefenkarten einsetzen, die mit einem anderen bildgebenden Verfahren als Stereoskopie gewonnen werden. Dazu zählen Lichtlaufzeitkameras, wie einleitend beschrieben. Ebenso ist der Einsatz der Erfindung nicht auf die Sicherheitstechnik beschränkt, da nahezu jede auf 3D-Bildern basierende Anwendung von zuverlässigeren Tiefenkarten profitiert. Mit dieser Vorbemerkung des weiteren Anwendungsbereichs wird im Folgenden nur noch das Beispiel einer stereoskopischen 3D-Sicherheitskamera 10 detailliert beschrieben. Die Erfindung ist weitgehend unabhängig davon, wie die dreidimensionalen Bilddaten gewonnen werden.

In der Ausführungsform gemäß Figur 1 sind zwei Kameramodule 14a, 14b in einem bekannten festen Abstand zueinander montiert und nehmen jeweils Bilder des Raumbereichs 12 auf. In jeder Kamera ist ein Bildsensor 16a, 16b vorgesehen, üblicherweise ein matrixförmiger Aufnahmechip, der ein rechteckiges Pixelbild aufnimmt, beispielsweise ein CCD- oder ein CMOS-Sensor. Den Bildsensoren 16a, 16b ist je ein Objektiv 18a, 18b mit einer abbildenden Optik zugeordnet, welche in der Praxis als jedes bekannte Abbildungsobjektiv realisiert sein können. Der Sichtwinkel dieser Optiken ist in Figur 1 durch gestrichelte Linien dargestellt, die jeweils eine Sichtpyramide 20a, 20b bilden.

In der Mitte zwischen den beiden Bildsensoren 16a, 16b ist eine Beleuchtungseinheit 22 vorgesehen, wobei diese räumliche Anordnung nur als Beispiel zu verstehen ist und die Beleuchtungseinheit ebenso asymmetrisch oder sogar außerhalb der 3D-Sicherheitskamera 10 angeordnet sein kann. Diese Beleuchtungseinheit 22 weist eine Lichtquelle 24, beispielsweise einen oder mehrere Laser oder LED, sowie ein Mustererzeugungselement 26 auf, das beispielsweise als Maske, Phasenplatte oder diffraktives optisches Element ausgebildet ist. Somit ist die Beleuchtungseinheit 22 in der Lage, den Raumbereich 12 mit einem strukturierten Muster auszuleuchten. Alternativ ist keine oder eine homogene Beleuchtung vorgesehen, um die natürlichen Objektstrukturen im Raumbereich 12 auszuwerten. Auch Mischformen mit verschiedenen Beleuchtungsszenarien sind denkbar.

Mit den beiden Bildsensoren 16a, 16b und der Beleuchtungseinheit 22 ist eine Steuerung 28 verbunden. Mittels der Steuerung 28 wird das strukturierte Beleuchtungsmuster erzeugt und bei Bedarf in seiner Struktur oder Intensität variiert, und die Steuerung 28 empfängt Bilddaten der Bildsensoren 16a, 16b. Aus diesen Bilddaten berechnet die Steuerung 28 mit Hilfe einer stereoskopischen Disparitätsschätzung dreidimensionale Bilddaten (Entfernungsbild, Tiefenkarte) des Raumbereichs 12. Das strukturierte Beleuchtungsmuster sorgt dabei für einen guten Kontrast und eine eindeutig zuordenbare Struktur jedes Bildelements in dem beleuchteten Raumbereich 12. Es ist selbstunähnlich, wobei der wichtigste Aspekt der Selbstunähnlichkeit das zumindest lokale, besser globale Fehlen von Translationssymmetrien vor allem in Korrelationsrichtung des Stereoalgorithmus' ist, so dass keine scheinbaren Verschiebungen von Bildelementen in den jeweils aus unterschiedlicher Perspektive aufgenommenen Bildern aufgrund gleicher Beleuchtungsmusterelemente erkannt werden, welche Fehler in der Disparitätsschätzung verursachen würden.

Mit zwei Bildsensoren 16a, 16b tritt dabei ein bekanntes Problem auf, dass Strukturen in Ausrichtung längs der Epipolarlinie nicht für die Disparitätsschätzung herangezogen werden können, weil hier das System nicht lokal unterscheiden kann, ob die Struktur in den beiden Bildern aufgrund der Perspektive gegeneinander verschoben aufgenommen oder ob lediglich ein ununterscheidbarer anderer Teil derselben, parallel zur Basis des Stereosystems ausgerichteten Struktur verglichen wird. Um dies zu lösen, können in anderen Ausführungsformen ein oder mehrere weitere Kameramodule eingesetzt werden, welche gegenüber der Verbindungsgeraden der ursprünglichen beiden Kameramodule 14a, 14b versetzt angeordnet sind.

Im von dem Sicherheitssensor 10 überwachten Raumbereich 12 können sich bekannte und unerwartete Objekte befinden. Dabei kann es sich beispielsweise wie dargestellt um einen Roboterarm 30, aber auch eine sonstige Maschine, eine Bedienperson und anderes handeln. Der Raumbereich 12 bietet Zugang zu einer Gefahrenquelle, sei es weil es ein Zugangsbereich ist oder weil sich eine gefährliche Maschine 30 in dem Raumbereich 12 selbst befindet. Um diese Gefahrenquelle abzusichern, können ein oder mehrere virtuelle Schutz- und Warnfelder 32 konfiguriert werden. Sie bilden einen virtuellen Zaun um die gefährliche Maschine 30. Aufgrund der dreidimensionalen Auswertung ist es möglich, Schutz- und Warnfelder 32 dreidimensional zu definieren, so dass eine große Flexibilität entsteht.

Die Steuerung 28 wertet die dreidimensionalen Bilddaten auf unzulässige Eingriffe aus. Die Auswertungsregeln können beispielsweise vorschreiben, dass in Schutzfeldern 32 überhaupt kein Objekt vorhanden sein darf. Flexiblere Auswertungsregeln sehen vor, zwischen erlaubten und nicht erlaubten Objekten zu differenzieren, etwa anhand von Bewegungsbahnen, Mustern oder Konturen, Geschwindigkeiten oder allgemeinen Arbeitsabläufen, die sowohl vorab als erlaubt konfiguriert oder eingelernt als auch anhand von Bewertungen, Heuristiken oder Klassifikationen noch während des Betriebs eingeschätzt werden.

Erkennt die Steuerung 28 einen unzulässigen Eingriff in ein Schutzfeld, so wird über eine Warn- oder Abschalteinrichtung 34, die wiederum in die Steuerung 28 integriert sein kann, eine Warnung ausgegeben oder die Gefahrenquelle abgesichert, beispielsweise der Roboterarm 30 angehalten. Sicherheitsrelevante Signale, also vor allem das Abschaltsignal, werden über einen Sicherheitsausgang 36 ausgegeben (OSSD, Output Signal Switching Device). Dabei hängt es von der Anwendung ab, ob eine Warnung genügt, beziehungsweise es ist eine zweistufige Absicherung vorgesehen, bei der zunächst gewarnt und erst bei fortgesetztem Objekteingriff oder noch tieferem Eindringen abgeschaltet wird. Statt einer Abschaltung kann die angemessene Reaktion auch das sofortige Verbringen in eine ungefährliche Parkposition sein.

Um für sicherheitstechnische Anwendungen geeignet zu sein, ist die 3D-Sicherheitskamera 10 fehlersicher ausgelegt. Dies bedeutet je nach geforderter Schutzklasse beziehungsweise Kategorie unter anderem, dass die 3D-Sicherheitskamera 10 sich selber, auch in Zyklen unterhalb der geforderten Ansprechzeit, testen kann, insbesondere auch Defekte der Beleuchtungseinheit 22 erkennt und somit sicherstellt, dass das Beleuchtungsmuster in einer erwarteten Mindestintensität verfügbar ist, und dass der Sicherheitsausgang 36 sowie die Warn- oder Abschalteinrichtung 34 sicher, beispielsweise zweikanalig ausgelegt sind. Ebenso ist auch die Steuerung 28 selbstsicher, wertet also zweikanalig aus oder verwendet Algorithmen, die sich selbst prüfen können. Derartige Vorschriften sind für allgemeine berührungslos wirkende Schutzeinrichtungen in der EN 61496-1 bzw. der IEC 61496 sowie in der DIN EN ISO 13849 und EN 61508 normiert. Eine entsprechende Norm für Sicherheitskameras befindet sich in der Vorbereitung.

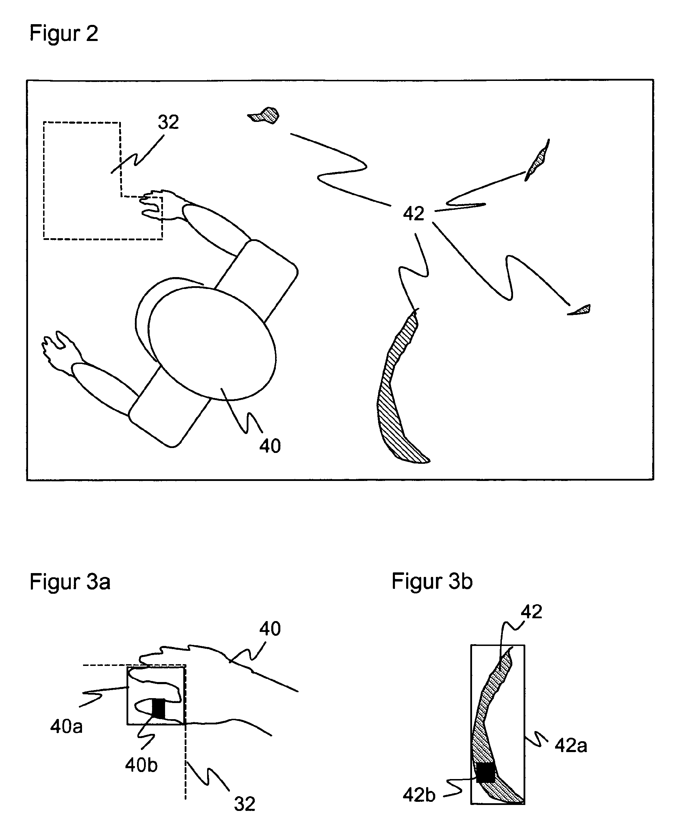

Figur 2 zeigt schematisch ein beispielhaftes Szenario, das von der 3D-Sicherheitskamera 10 aufgenommen und überwacht wird. Bilddaten dieser Szenerie werden aus den beiden unterschiedlichen Perspektiven des ersten und zweiten Bildsensors 16a, 16b ausgelesen. Diese Bilddaten werden zunächst einzeln einer Vorverarbeitung unterzogen. Dabei werden verbleibende Abweichungen von der geforderten Zentralperspektive entzerrt, welche die Objektive 18a, 18b aufgrund von nicht idealen optischen Eigenschaften einführen. Anschaulich gesprochen soll ein Schachbrett mit hellen und dunklen Quadraten als solches abgebildet werden, und Abweichungen davon werden mittels eines Modells der Optik, durch Konfiguration oder durch vorheriges Einlernen digital ausgeglichen. Ein weiteres bekanntes Beispiel für Vorverarbeitung ist ein Randenergieabfall, der durch Anheben der Helligkeit an den Rändern kompensierbar ist.

Auf den vorverarbeiteten Einzelbildern arbeitet dann der eigentliche Stereoalgorithmus. Strukturen des einen Bildes werden mit unterschiedlichem Translationsversatz mit Strukturen des anderen Bildes korreliert und der Versatz mit der besten Korrelation zur Disparitätsschätzung verwendet. Welche Norm die Korrelation bewertet, ist dabei nicht von prinzipieller Bedeutung, auch wenn die Leistungsfähigkeit des Stereoskopiealgorithmus' bei bestimmten Normen besonders hoch ist. Beispielhaft genannte Korrelationsmaße seien SAD (Sum of Absolute Differences), SSD (Sum of Squared Differences) oder NCC (Normalized Cross Correlation). Die Korrelation liefert nicht nur eine Disparitätsschätzung, aus der mit elementaren trigonometrischen Überlegungen unter Einbeziehung des Abstands der Kameras 14a, 14b ein Entfernungspixel für die Tiefenkarte resultiert, sondern zugleich ein Gütemaß für die Korrelation. Zusätzliche Qualitätskriterien sind denkbar, beispielsweise ein Texturfilter, welcher überprüft, ob die Bilddaten ausreichend Struktur für eine eindeutige Korrelation aufweisen, ein Nebenmaximumfilter, der die Eindeutigkeit des gefundenen Korrelationsoptimums testet, oder ein dritter Links-Rechts-Filter, in dem der Stereoalgorithmus ein zweites Mal auf die gegeneinander vertauschten ersten und zweiten Bilder angewandt wird, um Fehler durch Okklusionen zu begrenzen, also Bildmerkmalen, die aus der Perspektive der einen Kamera 14a, 14b gesehen werden, aus der Perspektive der anderen Kamera 14b, 14a aber nicht.

Der Stereoalgorithmus liefert dann eine Tiefenkarte, die zu jedem Bildpunkt einen Entfernungspixel mit einem Abstandswert hält, sowie eine Qualitätskarte, die wiederum jedem Entfernungspixel einen oder mehrere Zuverlässigkeitswerte als Vertrauensmaß zuordnet. Auf Basis der Zuverlässigkeitswerte wird dann entschieden, ob der jeweilige Tiefenwert für die weitere Auswertung zuverlässig genug ist oder nicht. Diese Bewertung ließe sich kontinuierlich vornehmen, für die praktische Weiterverarbeitung ist aber eine binäre Entscheidung vorzuziehen. Dabei wird in der Tiefenkarte jeder Wert, der das Zuverlässigkeitskriterium nicht erfüllt, auf einen ungültigen Entfernungswert wie -1, NIL oder dergleichen gesetzt. Die Qualitätskarte hat damit für das weitere Verfahren ihre Aufgabe erfüllt, welches allein auf der Tiefenkarte weiterarbeitet.

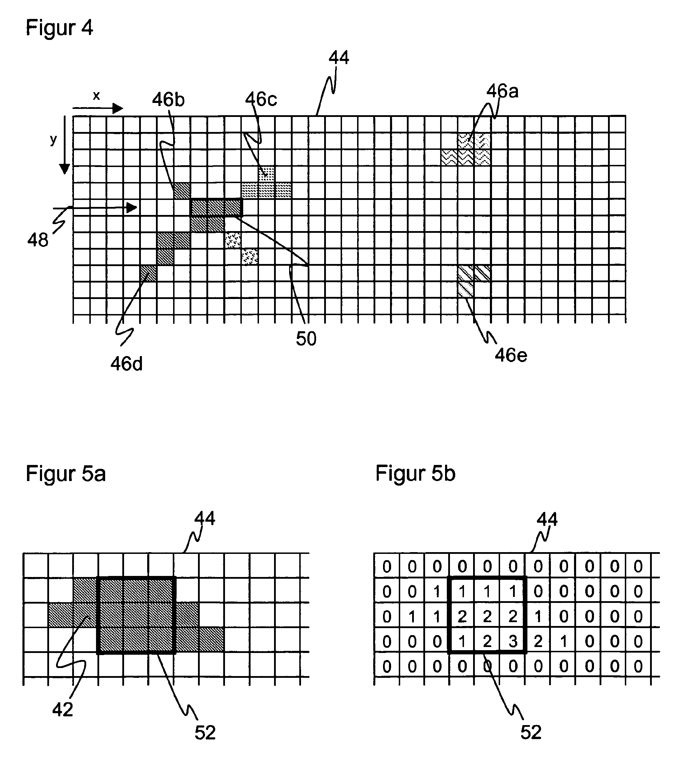

Die Szenerie der Figur 2 lässt sich auch als vereinfachte Tiefenkarte auffassen. Eine Person 40 wurde vollständig mit gültigen Entfernungspixeln erfasst. In einer detailgetreueren Darstellung einer Tiefenkarte müsste die Person 40 beispielsweise farbcodiert werden, wobei die Farbe für die nicht dargestellte erfasste Tiefendimension steht. In mehreren Bereichen 42 steht kein gültiger Entfernungswert zur Verfügung. Solche ungültigen Bereiche 42 werden als Fehlstellen oder Lücken in der Tiefenkarte bezeichnet. Für eine zuverlässige Objektdefinition ist ein 3D-Bildgebungsverfahren erforderlich, in dem derartige Lücken 42 nur kleine und möglichst wenige Positionen der Tiefenkarte besetzen, da jede Lücke 42 möglicherweise ein unerkanntes Objekt verdeckt. Weiter unten im Zusammenhang mit Figur 5 wird näher erläutert, wie die Lücken bewertet werden, um diese Voraussetzung sicherzustellen.

Als Arbeitsvolumen wird das gesamte Volumen des Sichtbereichs der 3D-Sicherheitskamera 10 bezeichnet, in dem Daten gewonnen und Tiefenwerte bestimmt werden können. In vielen Anwendungen ist nicht erforderlich, den gesamten Sichtbereich zu überwachen. Deshalb wird ein eingeschränktes Arbeitsvolumen vorkonfiguriert, beispielsweise in Form einer kalibrierten Referenz-Tiefenkarte, in denen ein oder mehrere Arbeitsvolumina definiert werden. In sicherheitstechnischen Anwendungen genügt häufig, die weitere Verarbeitung auf die Schutzbereiche 32 als eingeschränktes Arbeitsvolumen zu beschränken. In seiner einfachsten Ausprägung ist das eingeschränkte Arbeitsvolumen lediglich eine Abstandsfläche im maximalen Arbeitsabstand über den vollen Sichtbereich des Abstandssensors. Damit beschränkt sich die Reduktion der Datenmenge darauf, zu ferne Objekte von der Messung auszuschließen.

Die eigentliche Überwachungsaufgabe der 3D-Sicherheitskamera besteht darin, alle Objekte wie die Person 40 oder deren Extremitäten zu erkennen, die sich im Arbeitsvolumen befinden oder sich in das Arbeitsvolumen hineinbewegen, und deren Größe zu bestimmen. Abhängig von Parametern wie Position, Größe oder Bewegungsbahn des Objekts 40 entscheidet dann die Steuerung 28, ob ein Abschaltbefehl an die zu überwachende Maschine 30 erfolgen muss oder nicht. Ein einfacher Parametersatz sind statische Schutzfelder 32, in denen jedes eine Mindestgröße überschreitende Objekt 40 zur Abschaltung führt. Die Erfindung umfasst aber auch wesentlich kompliziertere Regeln, etwa dynamische Schutzfelder 32, die in Position und Größe variabel sind, oder zulässige Objekte 40, die zu gewissen Zeiten oder mit gewissen Bewegungsmustern auch in Schutzfeldern 32 erlaubt sind. Einige derartige Ausnahmen sind als "muting" und "blanking" für berührungslos wirkende Schutzeinrichtungen bekannt.

Die Objektdetektion muss sehr schnell erfolgen. Jede vollständige Auswertung einer Tiefenkarte wird als Zyklus bezeichnet. In praktischen sicherheitstechnischen Anwendungen werden mehrere Zyklen innerhalb einer Ansprechperiode benötigt, beispielsweise für Selbsttests der Bildsensoren oder um verschiedene Beleuchtungsszenarien auszuwerten. Dabei liegen typische Ansprechzeiten in der Größenordnung von unter 100ms, beispielsweise auch nur 20ms. Um die Rechenkapazitäten optimal zu nutzen, wird bevorzugt nicht zuerst ein komplettes Bild eingelesen, sondern die Auswertung beginnt bereits, sobald die erste oder die ersten Bildzeilen vorliegen. In einer Pipelinestruktur werden die von einem jeden Zwischenschritt bearbeiteten Zeilen an einen nachgeordneten Schritt weitergegeben. Somit befinden sich zu einem gegebenen Zeitpunkt zahlreiche Bildzeilen in unterschiedlichen Bearbeitungsstufen. Die Pipelinestruktur arbeitet am schnellsten mit Algorithmen, die mit einem einfachen zeilenweisen Durchgang auskommen, da bei anderen als one-pass-Verfahren abgewartet werden müsste, bis alle Bilddaten eines Frames eingelesen sind. Solche one-pass-Verfahren sparen zugleich Systemspeicher und verringern den Rechenaufwand.

Bei der Objektdetektion ist zu beachten, dass ein kleines Objekt 40 im Vordergrund ein größeres, ferneres Objekt 40 verdecken kann. Um den schlechtesten Fall zu berücksichtigen, wird jedes Objekt 40 unter perspektivischer Größenanpassung an den fernen Rand des Arbeitsvolumens projiziert. Ganz analog sind die Größen von Lücken 42 nach unten abzuschätzen. Ein besonders kritischer Fall ist, wenn eine Lücke 42 an ein Objekt 40 angrenzt. Das ist bei der maximal zulässigen Objektgröße beispielsweise durch Verminderung um die Größe der Lücke zu berücksichtigen.

Die Figuren 3a und 3b erläutern beispielhaft die Ermittlung und Vermessung von Objekten 40 beziehungsweise Lücken 42. Das Objekt 40 wird dabei nur im relevanten Schnittbereich mit dem Schutzfeld 32 ausgewertet. Da die Anforderungen von Sicherheitsnormen lediglich einen einzigen Größenwert angeben, beispielsweise 14mm für Fingerschutz, muss den Objekten 40 ein skalarer Größenwert zugewiesen werden. Dafür sind Maße wie die Pixelanzahl oder aus der Geometrie bekannte Definitionen des Durchmessers bekannt, die in erweiterter Definition auch für beliebige Formen gelten. Für die praktische Anwendung genügt meist der Vergleich mit einer einfachen geometrischen Form.

Dabei zeigt sich ein fundamentaler Unterschied zwischen der Bewertung von Objekten 40 und Lücken 42. Das Objekt 40 wird erfindungsgemäß über ein umschreibendes Rechteck 40a gemessen, die Lücke über ein eingeschriebenes Rechteck 42b. Man erkennt in Figur 3a, warum umgekehrt die Bewertung eines Objekts 40 mittels eingeschriebenem Rechteck 40a eine schlechtere Wahl wäre. Obwohl mehrere Finger in das Schutzfeld 32 eingreifen, würde das größte einschreibbare Rechteck 40a nur die Dimensionen eines Fingers aufweisen. Eine 3D-Sicherheitskamera, die für Handschutz und nicht bereits für Fingerschutz ausgelegt ist, würde diesen Eingriff fälschlich noch tolerieren. Ähnlich ist das umschreibende Rechteck 42a für die Lückenbewertung nicht optimal, besonders bei langen und schmalen Lücken 42 wie dargestellt. Diese Lücke 42a ist nämlich nur dann kritisch, wenn sich darin ein Objekt 40 oberhalb der kritischen Höchstgröße verbergen könnte. Das umschreibende Rechteck 42a überschätzt die Lücke 42 erheblich und setzt damit die Verfügbarkeit der 3D-Sicherheitskamera 10 unnötig herab. Das soeben beschriebene, nicht optimale Verhalten ließe sich auch durch aufwändigere geometrische Maße vermeiden, die aber wiederum zeilenweisen one-pass Auswertungen weniger zugänglich sind.

Anhand der Figur 4 soll nun ein erfindungsgemäßes, zeilenorientiertes Verfahren beschrieben werden, mit dem Objekte beliebig komplizierter Außenkontur in einem einzigen Durchgang geclustert werden. Das zeilenweise Vorgehen ermöglicht die Integration in die mehrfach angesprochene Echtzeitauswertung durch Pipelines. Unter einem Cluster wird eine Gruppe von Entfernungspixeln verstanden, welche sukzessiv unter Anwendung eines Abstandskriteriums als ein Objekt oder Teilobjekt zusammengefasst werden.

Die Tiefenkarte wird der Objekterkennung zeilenweise angeliefert. Die Objekterkennung arbeitet auf einer vereinfachten Tiefenkarte. Dafür werden zunächst alle Entfernungspixel zu Lücken 42 und Entfernungspixel außerhalb des eingeschränkten Arbeitsvolumens auf ungültig gesetzt, beispielsweise 0 oder -1, und alle dem Qualitätskriterium genügenden Entfernungspixel auf gültig, beispielsweise 1. Ungültige Entfernungspixel werden von der Objekterkennung nicht verwendet.

Nach dieser Vereinfachung entsteht ein binäres Auswertebild, welches die Objekte im Arbeitsvolumen sehr anschaulich zeigt. Dabei bilden sich in der Regel Cluster direkt benachbarter Pixel aus. In Figur 4 symbolisiert ein Raster 44 den Bildspeicher, in dem ein Ausschnitt des binären Auswertebilds dargestellt wird. Das binäre Auswertebild wird zeilenweise und in jeder Zeile von links nach rechts verarbeitet. Diese Cluster soll die Objekterkennung ermitteln, um beispielsweise eine Umrisslinie, eine Fläche, eine Pixelanzahl oder eine geometrische Vergleichsform für die Vermessung der Größe des Clusters zu bestimmen. Die Pixelanzahl eignet sich für eine Anwesenheitsentscheidung, ein Cluster mit weniger als einer Mindestzahl von Pixeln wird also nicht als Objekt behandelt.

Cluster werden von der Objekterkennung durch eine direkte Nachbarschaftsbeziehung zu den acht umgebenden Pixeln gebildet. Figur 4 zeigt durch verschiedene Schraffuren die fünf Teilcluster 46a-e an, wie sie die Objekterkennung nach Abschluss erkennen wird. Zur Erläuterung des Vorgehens deutet ein Pfeil 48 auf eine aktuell bearbeitete Zeile. Diese und die nachfolgenden Zeilen sind also von der Objekterkennung im Gegensatz zur Darstellung noch nicht verarbeitet. In der aktuellen Zeile zusammenhängende Zeilen-Objektstücke 50 werden zusammengefasst. Anschließend wird versucht, jedes solche Zeilen-Objektstück 50 an ein bereits vorhandenes Cluster der vorherigen Zeile anzulagern. Stehen wie im Beispiel der durch den Pfeil 48 gezeigten Zeile mehrere Teilcluster zur Auswahl, so wird als beliebige Wahl das Zeilen-Objektstück 50 beispielsweise an das in Auswertungsrichtung erste Cluster 46b angelagert. Zugleich wird aber in einer Objektverbindungsliste die Nachbarschaft auch zu allen weiteren früheren Clustern vermerkt, hier dem Cluster 46c. Gibt es kein Cluster 46a-e, an welches das Zeilen-Objektstück 50 angelagert werden kann, so wird ein neues Cluster initiiert.

Parallel zu dem Clustering werden die Anzahl der Pixel, deren Tiefenwerte und Pixelpositionen in einem zugehörigen Objektspeicher mit einer Objektliste akkumuliert und das umschreibende Rechteck jedes Clusters ermittelt. Die maßgeblichen Größen für das entstehende Teilobjekt sind damit immer verfügbar.

Nach Verarbeitung aller Zeilen werden mit wenig Aufwand Teilcluster mit Hilfe der Objektverbindungsliste zusammengefasst, im Beispiel die Teilcluster 46b-d, und dabei auch die maßgeblichen Objektgrößen für das Gesamtobjekt aktualisiert.

Die eigentliche Objekterkennung ist damit abgeschlossen. Abhängig vom gewählten Tiefenbildverfahren zerfallen Objekte in der Tiefenkarte manchmal in zwei oder mehrere Teile, verlieren also die direkte Pixelnachbarschaft, welche das Clustering voraussetzt. Räumlich sind diese Teil aber weiterhin nahe benachbart. Anhand der Objektliste wird deshalb optional in einem nachgeschalteten Schritt die räumliche Nähe der Objekte zueinander beurteilt. Erfüllen Teilobjekte ein Abstandskriterium, werden sie analog der Verbindung von Teilclustern zu einem Objekt zusammengefasst.

Aus der Objektliste ist dann die mittlere Tiefe und die Position aller Objekte bekannt. Über die Diagonale des umschreibenden Rechtecks und die mittlere Objekttiefe wird die maximale Objektgröße an seinem Ort errechnet. Von Interesse in der Sicherheitstechnik ist aber nicht nur das Objekt selbst, sondern auch, ob sich durch die Projektion des Objekts an den äußersten Rand des Arbeitsvolumens oder des eingeschränkten Arbeitsvolumens hinter einem unkritischen kleinen und nahen Objekt ein großes Objekt verbirgt. Um diesen Fall auszuschließen, wird das Objekt an den fernen Rand projiziert und entsprechend der notwendigen Verschiebung prozentual vergrößert. Die Projektionsgröße, nicht die eigentliche Objektgröße wird dann mit der geforderten unkritischen Höchstgröße verglichen, um über eine sicherheitsgerichtete Abschaltung zu entscheiden.

Wie mehrfach angesprochen, sind Lücken 42 anders zu bewerten als Objekte 40. Deshalb wird erfindungsgemäß ein eigenes zeilenorientiertes Verfahren zu Lückenbewertung angewandt, welches nun anhand der Figuren 5a und 5b erklärt wird. Figur 5a zeigt die zur Illustration grau gefärbten Pixel eine Lücke 42.

Zur Verarbeitung wird eine zusätzliche Auswertekarte s verwendet. In dieser Karte wird sukzessive ein Wert an jeder Stelle s(x,y) nach der folgenden Rechenvorschrift ermittelt:

$$s(x,y) = \begin{cases} 0 & \text{wenn } d(x,y) \neq 0 \\ 1 + \min(s(x-1,y), s(x-1,y-1), s(x,y-1)) & \text{wenn } d(x,y) = 0. \end{cases}$$

Dabei ist d(x,y)=0 genau dann, wenn der Tiefenwert an der Stelle (x,y) das Zuverlässigkeitskriterium nicht erfüllt. Für einen von 0 verschiedenen s-Wert gemäß der zweiten Zeile dieser Rechenvorschrift kann zusätzlich noch gefordert werden, dass (x,y) innerhalb des eingeschränkten Arbeitsvolumens liegt, so dass also Lücken 42 außerhalb des eingeschränkten Arbeitsvolumens keine Auswirkung haben.

Die angegebene Rechenvorschrift gilt für eine Verarbeitungsrichtung zeilenweise von oben nach unten und in jeder Zeile von rechts nach links. Sie ist sinngemäß an andere Durchlaufrichtungen durch die Tiefenkarte anzupassen, es werden jeweils die drei Nachbarn berücksichtigt, die schon durchlaufen sind und damit einen definierten s-Wert haben. Wegen Randlage nicht definierte Nachbarn haben den s-Wert 0. Der größte s-Wert eines jeden Clusters entspricht nach vollendeter Lückenbewertung der Kantenlänge des größten eingeschriebenen Quadrats, aus dem sich die andere Charakteristika wie die Diagonale sehr leicht errechnen lassen. Der global größte s-Wert misst die größte Lücke der ganzen Tiefenkarte. Für eine Zuverlässigkeitsbewertung wird es in den meisten Anwendungen auf dieses globale s-Maximum ankommen, welches kleiner als die kritische Höchstgröße sein muss, damit die Tiefenkarte sicherheitsgerichtet auswertbar ist. Man kann den jeweils größten s-Wert schon während des Durchgangs zur Bestimmung der s-Karte in einer Variablen mitschleifen, so dass er nach dem Durchlaufen der s-Karte sofort verfügbar ist.

Figur 5b zeigt die s-Werte für das Beispiel der Figur 5a. Der Eintrag "3" in der rechten unteren Ecke des größten einschreibbaren Quadrats 52 ist größter Wert der im Beispiel einzigen Lücke 42. Die Lücke 42 wird demnach mit der Kantenlänge 3 oder der zugehörigen Diagonalen bewertet, die sich durch bekannte Parameter der Bildsensoren 14a, b und der Optiken 16a,b in reale Größenwerte umrechnen lässt. Analog der

Objekte 40 werden auch Lücken 42 an den fernen Rand projiziert, um den schlechtesten denkbaren Fall (worst case) abzudecken. Ist nach Vergleich mit der unkritischen Höchstgröße denkbar, dass sich in der Lücke 42 ein kritisches Objekt 40 verbirgt, so erfolgt eine sicherheitsgerichtete Abschaltung.

## Patentansprüche

1. 3D-Sensor (10) mit mindestens einem Bildsensor (14) zur Erzeugung von Bilddaten eines Überwachungsbereichs (12) sowie mit einer 3D-Auswertungseinheit (28), welche für die Berechnung einer Entfernungspixel aufweisenden Tiefenkarte aus den Bilddaten sowie für die Ermittlung von Zuverlässigkeitswerten für die Entfernungspixel ausgebildet ist,
   wobei eine Lückenbewertungseinheit (28) vorgesehen ist, welche dafür ausgebildet ist, Bereiche der Tiefenkarte mit Entfernungspixeln, deren Zuverlässigkeitswert ein Zuverlässigkeitskriterium nicht erfüllt, als Lücken (42) der Tiefenkarte zu erkennen,
   **dadurch gekennzeichnet,**
   **dass** die Lückenbewertungseinheit (28) dafür ausgebildet ist, anhand einer größtmöglichen in Lücken (42) eingeschriebenen geometrischen Form (42b) zu bewerten, ob die Tiefenkarte Lücken (42) größer als eine unkritische Höchstgröße aufweist, und dass eine Abschalteinheit (34) vorgesehen ist, mittels derer bei Erkennung von Lücken (42) größer als die unkritische Höchstgröße ein sicherheitsgerichteter Abschaltbefehl an eine gefährliche Maschine (30) ausgebbar ist.

2. 3D-Sensor (10) nach Anspruch 1,
   wobei die Lückenbewertungseinheit (28) für eine Bewertung der Größe von Lücken (42) anhand des Durchmessers eines Inkreises oder der Diagonale eines Innenrechtecks ausgebildet ist.

3. 3D-Sensor (10) nach einem der vorhergehenden Ansprüche,
   der eine Objektbewertungseinheit (28) aufweist, welche dafür ausgebildet ist, zusammenhängende Bereiche von Entfernungspixeln als Objekte (40) zu erkennen und die Größe eines Objekts (40) anhand einer kleinstmöglichen, das Objekt (40) umschreibenden geometrischen Form (40a) zu bewerten, insbesondere anhand des Durchmessers eines Umkreises oder der Diagonale eines umgeschriebenen Rechtecks.

4. 3D-Sensor (10) nach Anspruch 3,
   wobei die Objektbewertungseinheit (28) dafür ausgebildet ist, in einem ersten Schritt eine binäre Karte zu erzeugen, die in jedem Pixel festhält, ob der Zuverlässigkeitswert des zugehörigen Entfernungspixels das Zuverlässigkeitskriterium erfüllt und somit mit einem gültigen Entfernungswert besetzt ist oder nicht, dann in einem weiteren Schritt in einem einzigen zeilenweisen Durchgang Teilobjekte (46a-e) zu definieren, indem ein besetztes Entfernungspixel ohne besetzten Nachbar ein neues Teilobjekt (46a-e) beginnt und besetzte Entfernungspixel mit mindestens einem besetzten Nachbarn dem Teilobjekt (46a-e) eines der besetzten Nachbarn angelagert werden, und wobei in einem dritten Schritt Teilobjekte (46a-e), die zueinander höchstens einen vorgegebenen Abstand aufweisen, zu den Objekten zusammengefasst werden.

5. 3D-Sensor (10) nach einem der vorhergehenden Ansprüche,
   wobei die Lückenbewertungseinheit und/oder die Objektbewertungseinheit dafür ausgebildet ist, die Größe einer Lücke (42) oder eines Objekts (40) nach unten abzuschätzen, insbesondere durch Projektion an den fernen Rand des Überwachungsbereichs (12) oder eines Arbeitsbereichs (32).

6. 3D-Sensor (10) nach einem der vorhergehenden Ansprüche,
   wobei die Lückenbewertungseinheit (28) und/oder die Objektbewertungseinheit (28) dafür ausgebildet ist, Lücken (42) oder Objekte (40) der Tiefenkarte in einem einzigen zeilenweisen Durchgang in Echtzeit zu berechnen.

7. 3D-Sensor (10) nach einem der vorhergehenden Ansprüche,
   wobei die Lückenbewertungseinheit (28) dafür ausgebildet ist, die Größe von Lücken (42) zu bestimmen, indem sukzessive eine Auswertungskarte s nach der Rechenvorschrift

$$s(x,y) = \begin{cases} 0 & wenn\ d(x,y) \neq 0 \\ 1 + \min(s(x-1,y), s(x-1,y-1), s(x,y-1)) & wenn\ d(x,y) = 0 \end{cases}$$

erzeugt wird, wobei d(x,y)=0 genau dann gilt, wenn der Zuverlässigkeitswert des Entfernungspixels an der Position (x,y) der Tiefenkarte das Zuverlässigkeitskriterium nicht erfüllt.

8. 3D-Sensor (10) nach einem der vorhergehenden Ansprüche,
der mindestens zwei Bildsensoren (14a-b) zur Aufnahme von Bilddaten des Überwachungsbereichs (12) aus unterschiedlicher Perspektive aufweist, wobei die 3D-Auswertungseinheit (28) für die Erzeugung der Tiefenkarte und der Zuverlässigkeitswerte mit einem stereoskopischen Verfahren ausgebildet ist.

9. 3D-Sensor (10) nach einem der vorhergehenden Ansprüche,
wobei mittels der Abschalteinheit (34) bei Erkennung von unzulässigen Objekten (40) größer als die unkritische Höchstgröße ein sicherheitsgerichteter Abschaltbefehl an eine gefährliche Maschine (30) ausgebbar ist, oder wobei eine Warneinheit (34) vorgesehen ist, mittels derer bei Erkennung von Lücken (42) oder unzulässigen Objekten (40) größer als die unkritische Höchstgröße ein Warnsignal ausgebbar ist.

10. 3D-Sensor (10) nach einem der vorhergehenden Ansprüche,
wobei ein Arbeitsbereich (32) als Teilbereich des Überwachungsbereichs (12) vorgegeben ist und die 3D-Auswertungseinheit (28), die Lückenbewertungseinheit (28) und/oder die Objektbewertungseinheit (28) die Tiefenkarte nur innerhalb des Arbeitsbereichs (32) auswertet.

11. 3D-Überwachungsverfahren, insbesondere stereoskopisches Überwachungsverfahren, bei dem aus Bilddaten eines Überwachungsbereichs (12) eine Entfernungspixel aufweisende Tiefenkarte sowie jeweils ein Zuverlässigkeitswert für jeden Entfernungspixel erzeugt wird,
wobei Bereiche der Tiefenkarte mit Entfernungspixeln, deren Zuverlässigkeitswert ein Zuverlässigkeitskriterium nicht erfüllt, als Lücken (42) der Tiefenkarte erkannt werden,
**dadurch gekennzeichnet,**
**dass** anhand einer größtmöglichen in Lücken (42) eingeschrieben geometrischen Form (42b) bewertet wird, ob die Tiefenkarte Lücken (42) größer als eine unkritische Höchstgröße aufweist, und dass bei Erkennung von Lücken (42) größer als die unkritische Höchstgröße ein sicherheitsgerichteter Abschaltbefehl an eine gefährliche Maschine (30) ausgegeben wird.

12. 3D-Überwachungsverfahren nach Anspruch 11,
wobei die Größe von Lücken (42) anhand des Durchmessers eines Inkreises oder der Diagonale eines Innenrechtecks bewertet wird und/oder wobei zusammenhängende Bereiche von Entfernungspixeln als Objekte (40) erkannt und die Größe eines Objekts (40) anhand einer kleinstmöglichen, das Objekt (40) umschreibenden geometrischen Form (40a) bewertet wird, insbesondere anhand des Durchmessers eines Umkreises oder der Diagonale eines umgeschriebenen Rechtecks.

13. 3D-Überwachungsverfahren nach Anspruch 11 oder 12,
wobei die Größe einer Lücke (42) oder eines Objekts (40) nach unten abgeschätzt wird, insbesondere durch Projektion an den fernen Rand des Überwachungsbereichs (12) oder eines Arbeitsbereichs (32).

14. 3D- Überwachungsverfahren nach einem der Ansprüche 11 bis 13,
wobei die Lücken (42) oder Objekte (40) der Tiefenkarte in einem einzigen zeilenweisen Durchgang in Echtzeit berechnet werden.

15. 3D- Überwachungsverfahren nach einem der Ansprüche 11 bis 14,
wobei bei Erkennung von unzulässigen Objekten (40) größer als die unkritische Höchstgröße ein sicherheitsgerichteter Abschaltbefehl an eine gefährliche Maschine (30) ausgegeben wird, oder wobei bei Erkennung von Lücken (42) oder unzulässigen Objekten (40) größer als die unkritische Höchstgröße ein Warnsignal ausgegeben wird.

**Claims**

1.  A 3D sensor (10) having at least one image sensor (14) for the generation of image data of a monitored region (12) and a 3D evaluation unit (28) which is adapted for the calculation of a depth map having distance pixels from the image data and for the determination of reliability values for the distance pixels wherein a gap evaluation unit (28) is provided which is adapted to recognize regions of the depth map with distance pixels whose reliability value does not satisfy a reliability criteria as gaps (42) in the depth map,
    **characterized in that**
    the gap evaluation unit (28) is adapted to evaluate by means of a largest possible geometric shape (42b) inscribed into gaps (42) whether the depth map has gaps (42) larger than an uncritical maximum size, and **in that** a shutdown unit (34) is provided by means of which upon detection of gaps (42) larger than the uncritical maximum size a safety related shutdown command to a dangerous machine (30) can be output.

2.  A 3D sensor (10) in accordance with claim 1,
    wherein the gap evaluation unit (28) is adapted for an evaluation of the size of gaps (42) by means of a diameter of an inner circle or of a diagonal of an inner rectangle.

3.  A 3D sensor (10) in accordance with any of the preceding claims,
    having an object evaluation unit (28) which is adapted to recognize connected regions of distance pixels as objects (40) and to evaluate the size of an object (40) by means of a smallest possible geometric shape (42a) surrounding the object (40), in particular by means of a diameter of a circumference or a diagonal of a surrounding rectangle.

4.  A 3D sensor (10) in accordance with claim 3,
    wherein the object evaluation unit (28) is adapted to generate a binary map in a first step, said binary map records in every pixel whether the reliability value of the associated distance pixel satisfies the reliability criteria and thus whether it is occupied with a valid distance value or not, then in a further step defines partial objects (46a-e) in a single linear scanning run, in that an occupied distance pixel without an occupied neighbour starts a new partial object (46a-e) and attaches occupied distance pixels with at least one occupied neighbour to the partial object (46a-e) of an occupied neighbour and wherein in a third step, partial objects (46a-e) which have at most a preset distance to one another are combined to the object.

5.  A 3D sensor (10) in accordance any of the preceding claims,
    wherein the gap evaluation unit and/or the object evaluation unit is adapted to overestimate the size of a gap (42) or an object (40), in particular by projection on to the remote border of the monitored region (12) or of a work region (32).

6.  A 3D sensor (10) in accordance with any of the preceding claims,
    wherein the gap evaluation unit (28) and/or the object evaluation unit (28) is adapted to calculate gaps (42) or objects (40) of the depth map in a single linear run in real time.

7.  A 3D sensor (10) in accordance with any of the preceding claims,
    wherein the gap evaluation unit (28) is adapted to determine the size of the gaps (42) by successively generating an evaluation map s in accordance with the calculation rule,

$$s(x,y) = \begin{cases} 0 & when\, d(x,y) \neq 0 \\ 1 + \min(s(x-1,y), s(x-1,y-1), s(x,y-1)) & when\, d(x,y) = 0 \end{cases}$$

    wherein d(x,y) = 0 is valid precisely then when the reliability value of the distance pixel at the position (x,y) of the depth map does not satisfy the reliability criterion.

8.  A 3D sensor (10) in accordance with any of the preceding claims,
    having at least two image sensors (14a-b) for the reception of image data from the monitored region (12) from different perspectives, wherein the 3D evaluation unit (28) is adapted for the generation of the depth map and the reliability values using a stereoscopic method.

9.  A 3D sensor (10) in accordance with any of the preceding claims,
    wherein by means of the shutdown unit (34) upon detection of prohibited objects (40) larger than the uncritical maximum size a safety related shutdown command to a dangerous machine (30) can be output, or wherein a warning unit (34) is provided by means of which upon detection of gaps (42) or prohibited objects (40) larger than the uncritical maximum size a warning signal can be output.

10. A 3D sensor (10) in accordance with any of the preceding claims,
wherein a work region (32) is preset as a partial region of the monitored region (12) and the 3D evaluation unit (28), the gap evaluation unit (28) and/or the object evaluation unit (28) only evaluates the depth map within the work region (32).

11. A 3D monitoring process, in particular a stereoscopic monitoring process, in which a depth map having distance pixels as well as a respective reliability value for each distance pixel is generated from image data from a monitored region (12),
wherein regions of the depth map having distance pixels whose reliability values do not satisfy a reliability criterion are detected as gaps (42) in the depth map **characterized in that**
by means of a largest possible inscribed geometric shape (42b) an evaluation is made whether the depth map has gaps (42) which are larger than an uncritical maximum size, and **in that** upon detection of gaps (42) larger than the uncritical maximum size a safety related shutdown command is output to a dangerous machine (30).

12. A 3D monitoring process in accordance with claim 11,
wherein the size of gaps (42) is evaluated by means of a diameter of an inner circle or a diagonal of an inner rectangle and/or wherein connected regions of distance pixels are recognized as objects (40) and the size of an object (40) is evaluated by means of a smallest possible shape (40a) surrounding the object, in particular by means of a diameter of a circumference or a diagonal of a surrounding rectangle.

13. A 3D monitoring process in accordance with claim 11 or 12,
wherein the size of a gap (42) or an object (40) is overestimated, in particular by projection on to the remote border of the monitored region (12) or a work region (32).

14. A 3D monitoring process in accordance with any of claims 11 to 13,
wherein the gaps (42) or objects (40) of the depth map are calculated in real time in a single linear scanning run.

15. A 3D monitoring process in accordance with any of claims 11 to 14,
wherein upon detection of prohibited objects (40) larger than the uncritical maximum size a safety related shutdown command is output to a dangerous machine (30), or wherein upon detection of gaps (42) or prohibited objects (40) larger than the uncritical maximum size a warning signal is output

**Revendications**

1. Capteur 3D (10) comprenant au moins un capteur d'image (14) pour engendrer des données image d'une zone de surveillance (12) ainsi qu'une unité d'évaluation 3D (28), qui est réalisée pour le calcul d'une carte de profondeur comprenant des pixels d'éloignement à partir des données image, ainsi que pour la détermination de valeurs de fiabilité pour les pixels d'éloignement,
dans lequel il est prévu une unité d'évaluation de lacunes (28) qui est réalisée pour reconnaître, à titre de lacunes (42) de la carte de profondeur, des zones de la carte de profondeur avec des pixels d'éloignement dont la valeur de fiabilité ne satisfait pas un critère de fiabilité,
**caractérisé en ce que**
l'unité d'évaluation de lacunes (28) est réalisée pour évaluer, au moyen d'une forme géométrique (42b) la plus grande possible inscrite dans des lacunes (42), si la carte de profondeur comporte des lacunes (42) plus grandes qu'une taille maximum non critique, et **en ce qu'**il est prévu une unité de coupure (34) au moyen de laquelle, en cas de reconnaissance de lacunes (42) plus grandes que la taille maximum non critique, un signal de coupure à des fins de sécurité peut être délivré à une machine dangereuse (30).

2. Capteur 3D (10) selon la revendication 1,
dans lequel l'unité d'évaluation de lacunes (28) est réalisée pour une évaluation de la taille de lacunes (42) au moyen du diamètre d'un cercle inscrit ou de la diagonale d'un rectangle inscrit.

3. Capteur 3D (10) selon l'une des revendications précédentes,

qui comprend une unité d'évaluation d'objets (28), laquelle est réalisée pour reconnaître des zones groupées de pixels d'éloignement comme étant des objets (40), et d'évaluer la taille d'un objet (40) au moyen d'une forme géométrique (40a) la plus petite possible, qui circonscrit l'objet (40), en particulier au moyen du diamètre d'un cercle circonscrit ou de la diagonale d'un rectangle circonscrit.

4. Capteur 3D (10) selon la revendication 3,
dans lequel l'unité d'évaluation d'objets (28) est réalisée pour, dans un premier stade, engendrer une carte binaire qui constate dans chaque pixel si la valeur de fiabilité du pixel d'éloignement associé satisfait le critère de fiabilité et est donc occupé ou non par une valeur d'éloignement valide, puis, dans un autre stade, pour définir en une unique passe ligne par ligne, des objets partiels (46a-e) en ce qu'un pixel d'éloignement occupé sans voisin occupé commence un nouvel objet partiel (46a-e), et que des pixels d'éloignement occupés avec au moins un voisin occupé sont adjacents à l'objet partiel (46a-e) de l'un des voisins occupés, et dans lequel, dans un troisième stade, des objets partiels (46a-e), qui présentent les uns par rapport aux autres au maximum une distance prédéterminée, sont regroupés pour donner les objets.

5. Capteur 3D (10) selon l'une des revendications précédentes,
dans lequel l'unité d'évaluation de lacunes et/ou l'unité d'évaluation d'objets est réalisée pour estimer la taille d'une lacune (42) ou d'un objet (40) vers le bas, en particulier par projection sur la bordure éloignée de la zone de surveillance (12) ou d'une zone de travail (32).

6. Capteur 3D (10) selon l'une des revendications précédentes,
dans lequel l'unité d'évaluation de lacunes (28) et/ou l'unité d'évaluation d'objets (28) est réalisée pour calculer des lacunes (42) ou des objets (40) de la carte de profondeur en temps réel dans une unique passe ligne par ligne.

7. Capteur 3D (10) selon l'une des revendications précédentes,
dans lequel l'unité d'évaluation de lacunes (28) est réalisée pour déterminer la taille de lacunes (42) en engendrant successivement une carte d'évaluation s selon la règle de calcul

$$s(x, y) = \begin{cases} 0 \text{ quand } d(x, y) \neq Z \\ 1 + \min(s(x\text{-}1, y), s(x\text{-}1, y\text{-}1), s(x, y\text{-}1)) \text{ quand } d(x, y) = 0. \end{cases}$$

dans laquelle d(x, y)= 0 s'applique exactement quand la valeur de fiabilité du pixel éloignement à la position (x, y) de la carte de profondeur ne satisfait pas le critère de fiabilité.

8. Capteur 3D (10) selon l'une des revendications précédentes,
qui comprend au moins deux capteurs d'images (14a-b) pour recevoir des données image de la zone de surveillance (12) depuis des perspectives différentes, et l'unité d'évaluation 3D (28) est réalisée pour générer la carte de profondeur et les valeurs de fiabilité avec un procédé stéréoscopique.

9. Capteur 3D (10) selon l'une des revendications précédentes,
dans lequel, en cas de reconnaissance d'objets inadmissibles (40) plus grand que la taille maximum non critique, un ordre de coupure à des fins de sécurité peut être délivré au moyen de l'unité de coupure (34) à une machine dangereuse (30), ou dans lequel il est prévu une unité d'avertissement (34) au moyen de laquelle un signal d'avertissement peut être délivré en cas de reconnaissance de lacunes (42) ou d'objets inadmissibles (40) plus grand(e) s que la taille maximum non critique.

10. Capteur 3D (10) selon l'une des revendications précédentes,
dans lequel une zone de travail (32) est imposée à titre de zone partielle de la zone de surveillance (12), et l'unité d'évaluation 3D (28), l'unité d'évaluation de lacunes (28) et/ou l'unité d'évaluation d'objets (28) évaluent la carte de profondeur uniquement à l'intérieur de la zone de travail (32).

11. Procédé de surveillance 3D, en particulier procédé de surveillance stéréoscopique, dans lequel on engendre une carte de profondeur comprenant des pixels d'éloignement, à partir des données image d'une zone de surveillance (12) et l'on engendre respectivement une valeur de fiabilité pour chaque pixel d'éloignement, dans lequel des régions de la carte de profondeur présentant des pixels d'éloignement dont la valeur de fiabilité ne satisfait pas un critère de fiabilité, sont reconnues comme étant des lacunes (42) de la carte de profondeur, **caractérisé en ce que**

au moyen d'une forme géométrique (42b) la plus grande possible inscrite dans des lacunes (42), on détermine si la carte de profondeur comporte des lacunes (42) plus grandes qu'une taille maximum non critique et, en cas de reconnaissance de lacunes (42) plus grandes que la taille maximum non critique, un ordre de coupure à des fins de sécurité est délivré à une machine dangereuse (30).

12. Procédé de surveillance 3D selon la revendication 11,
dans lequel la taille des lacunes (42) est évaluée au moyen du diamètre d'un cercle inscrit ou de la diagonale d'un rectangle inscrit et/ou dans lequel des zones groupées de pixels d'éloignement sont reconnues comme étant des objets (40), et la taille d'un objet (40) est évaluée au moyen d'une forme géométrique (40a) la plus petite possible, circonscrite à l'objet (40), en particulier au moyen du diamètre d'un cercle circonscrit ou de la diagonale d'un rectangle circonscrit.

13. Procédé de surveillance 3D selon la revendication 11 ou 13,
dans lequel la taille d'une lacune (42) ou d'un objet (40) est estimée vers le bas, en particulier par projection sur la bordure éloignée de la zone de surveillance (12) ou d'une zone de travail (32).

14. Procédé de surveillance 3D selon l'une des revendications 11 à 13, dans lequel les lacunes (42) ou les objets (40) de la carte de profondeur sont calculé(e)s en temps réel, en une unique passe ligne par ligne.

15. Procédé de surveillance 3D selon l'une des revendications 11 à 14, dans lequel en cas de reconnaissance d'objets inadmissibles (40) plus grands que la taille maximum non critique, un ordre de coupure à des fins de sécurité est délivré à une machine dangereuse (30), ou dans lequel en cas de reconnaissance de lacunes (42) ou d'objets inadmissibles (40) plus grand(e)s que la taille maximum non critique, un signal d'avertissement est délivré.

Figur 1

## Figur 2

## Figur 3a

## Figur 3b

Figur 4

Figur 5a

Figur 5b

**EP 2 275 990 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030222983 A1
- US 20010028729 A1